(19) Europäisches Patentamt / European Patent Office / Office européen des brevets

(11) **EP 3 276 337 B1**

(12) **FASCICULE DE BREVET EUROPEEN**

(45) Date de publication et mention
de la délivrance du brevet:
**02.09.2020 Bulletin 2020/36**

(51) Int Cl.:
***G01N 21/77*** *(2006.01)*

(21) Numéro de dépôt: **17182954.2**

(22) Date de dépôt: **25.07.2017**

(54) **DISPOSITIF OPTIQUE À MICRO-RÉSONATEUR EN ANNEAU SEGMENTÉ**

OPTISCHE VORRICHTUNG MIT MIKRORESONATOR MIT SEGMENTIERTEM RING

OPTICAL DEVICE WITH SEGMENTED-RING MICRO-RESONATOR

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.07.2016 FR 1657222**

(43) Date de publication de la demande:
**31.01.2018 Bulletin 2018/05**

(73) Titulaire: **Commissariat à l'Energie Atomique et
aux Energies
Alternatives
75015 Paris (FR)**

(72) Inventeurs:
• **BOUTAMI, Salim
38100 Grenoble (FR)**
• **TAUREL, Boris
38330 Montbonnot-Saint-Martin (FR)**

(74) Mandataire: **Brevalex
56, Boulevard de l'Embouchure
B.P. 27519
31075 Toulouse Cedex 2 (FR)**

(56) Documents cités:
**WO-A1-2014/161565     US-A1- 2008 129 997
US-A1- 2009 220 184**

• **Damian Goldring ET AL: "Highly dispersive
micro-ring resonator based on one dimensional
photonic crystal waveguide design and analysis
References and Links", Nature Opt. Lett. Phys.
Rev. A Phys. Review E. J. Opt. Soc. Am. A Opt.
Lett. Opt. Express J. Scheuer and A. Yariv Phys.
Rev. Lett. Opt. Commun, 1 janvier 1997
(1997-01-01), pages 143-145, XP055092518,
Extrait de l'Internet:
URL:http://www.opticsinfobase.org/DirectPD
FAccess/990F85AF-D9E0-01F8-B1A2ADD2634B
D10
1_131174/oe-15-6-3156.pdf?da=1&id=131174&s
eq=0&mobile=no [extrait le 2013-12-10]**
• **Valentina Donzella ET AL: "Design and
fabrication of SOI micro-ring resonators based
on sub-wavelength grating waveguides", Optics
Express, vol. 23, no. 4, 17 February 2015
(2015-02-17), page 4791, XP055575629, DOI:
10.1364/OE.23.004791**
• **Jonas Flueckiger ET AL: "Sub-wavelength
grating for enhanced ring resonator biosensor",
Optics Express, vol. 24, no. 14, 1 July 2016
(2016-07-01), page 15672, XP055575645, DOI:
10.1364/OE.24.015672**

**Description**

**DOMAINE TECHNIQUE**

L'invention concerne un micro-résonateur optique, notamment pour le domaine des capteurs biologiques ou chimiques, en particulier les capteurs de gaz utilisant un micro-résonateur à guide d'onde.

Dans un tel capteur, un faisceau lumineux interagit avec le milieu biologique ou chimique dans lequel baigne le micro-résonateur.

Cette interaction se traduit par des pertes optiques et/ou un décalage d'une longueur d'onde de résonance du micro-résonateur, ce qui permet de caractériser ledit milieu biologique ou chimique.

On mesure par exemple une concentration, en particulier une concentration d'un gaz.

**ÉTAT DE LA TECHNIQUE ANTÉRIEURE**

On connaît dans l'art antérieur un dispositif optique pour un capteur de protoxyde d'azote, tel que décrit dans l'article "Sensing nitrous oxide with QCL-coupled silicon-on-sapphire ring resonators", Clinton J. Smith et al., OPTICS EXPRESS, Vol. 23, No. 5, pp 5491-5499.

Le dispositif optique décrit dans cet article comprend un guide d'onde d'injection et extraction, et un micro-résonateur à guide d'onde.

Le micro-résonateur à guide d'onde est constitué d'un guide d'onde courbé en forme d'anneau, nommé micro-résonateur en anneau.

Le guide d'onde courbé présente la particularité de ne pas comprendre de gaine. En fonctionnement, c'est le milieu dans lequel baigne le micro-résonateur qui fait office de gaine.

Le guide d'onde d'injection et extraction est constitué d'un guide d'onde qui s'étend en ligne droite à proximité du micro-résonateur en anneau, parallèle à une tangente à l'anneau.

En fonctionnement, un faisceau lumineux, dit faisceau d'analyse, est envoyé en entrée du guide d'onde d'injection et extraction.

A une longueur d'onde de résonance du micro-résonateur en anneau, celui-ci est couplé optiquement avec le guide d'onde d'injection et extraction, par couplage évanescent.

Le couplage évanescent correspond en particulier à une interaction entre un mode guidé du guide d'onde d'injection et extraction, avec un mode guidé du micro-résonateur, ce qui aboutit à un transfert d'énergie entre ces deux modes.

Une longueur d'onde de résonance du micro-résonateur en anneau est une longueur d'onde pour laquelle le déphasage apporté par un tour dans l'anneau est un multiple de $2\pi$.

Ainsi, une partie du faisceau laser d'analyse s'échappe vers le micro-résonateur en anneau, où elle effectue un ou plusieurs tours avant de revenir vers le guide d'onde d'injection et extraction.

Lors de son passage dans le micro-résonateur en anneau, cette partie du faisceau d'analyse subit des pertes optiques, qui sont dues notamment à l'absorption par le milieu entourant l'anneau et faisant office de gaine. Le taux d'absorption dépend de la concentration en protoxyde d'azote dans ce milieu. L'anneau peut présenter également des pertes radiatives par courbure, en particulier pour de faibles rayons de courbure (rayon de l'ordre ou inférieur à la longueur d'onde).

Ainsi, l'analyse de la lumière en sortie du guide d'onde d'injection et extraction permet de déterminer un taux de perte à la longueur d'onde de résonance, et d'en déduire une concentration en protoxyde d'azote.

Un inconvénient de ce dispositif est sa faible sensibilité, qui correspond ici à une faible variation du taux de transmission à la longueur d'onde de résonance lorsque la composition du milieu environnant varie.

Des capteurs biochimiques basés sur micro-résonateurs optiques sont également décrits dans:

"Design and fabrication of SOI micro-ring resonators based on sub-wavelength grating waveguides", Valentina Donzella et al., Optics Express, vol. 23, no. 4, p. 4791,
"Sub-wavelength grating for enhanced ring resonator biosensor", Jonas Flueckiger et al.,Optics Express, vol. 24, no. 14, p. 15672,
US 2009/220184 A1,et
WO 2014/161565 A1.

Un objectif de la présente invention est de proposer un dispositif optique, notamment pour un capteur biologique ou chimique, utilisant un micro-résonateur à guide d'onde, et présentant une sensibilité améliorée.

## EXPOSÉ DE L'INVENTION

Cet objectif est atteint avec un dispositif optique, notamment pour un capteur biologique ou chimique, comprenant :

- un micro-résonateur à guide d'onde, agencé pour guider un faisceau lumineux selon un chemin optique en boucle fermée ; et
- au moins un guide d'onde d'injection et/ou extraction, couplé optiquement au micro-résonateur pour l'injection et/ou l'extraction dudit faisceau lumineux,

dans lequel le micro-résonateur est constitué d'une pluralité de guides d'onde élémentaires espacés les uns des autres de sorte que l'entrée d'un guide d'onde élémentaire n'est pas en contact physique direct avec la sortie d'un guide d'onde élémentaire voisins, séparés deux à deux par des espaces libres configurés, en utilisation, être occupés par un milieu gazeux ou liquide, et disposés les uns à la suite des autres selon un agencement en forme de boucle.

Selon l'invention, le dispositif optique comporte un substrat et un pilier central, avec le micro-résonateur à guide d'onde agencé suspendu au-dessus du substrat, en appui sur le pilier central.

En fonctionnement, dans le cadre d'une utilisation pour un capteur biologique ou chimique, le micro-résonateur baigne dans le milieu biologique ou chimique à caractériser.

Ce milieu biologique ou chimique s'étend non seulement autour des guides d'onde élémentaires, en faisant office de gaine pour chacun d'eux, mais également dans les espaces entre deux guides d'onde élémentaires.

On augmente ainsi un volume d'interaction entre la lumière circulant dans le micro-résonateur, et le milieu biologique ou chimique environnant.

En d'autres termes, il y a beaucoup d'énergie imprégnée par le milieu environnant, en particulier entre les guides d'onde élémentaires.

La sensibilité du dispositif optique selon l'invention est donc supérieure à la sensibilité d'un dispositif similaire dans lequel le micro-résonateur serait constitué d'un micro-résonateur en anneau tel que décrit en introduction.

De préférence, le gain en sensibilité est d'un facteur supérieur ou égal à trois.

En particulier, l'invention permet d'augmenter une variation de l'absorption par le milieu biologique ou chimique, d'un faisceau lumineux guidé dans le micro-résonateur, lorsque la composition dudit milieu varie.

En complément ou en variante, l'invention permet d'augmenter une variation de l'indice effectif du mode guidé dans le micro-résonateur, lorsque la composition dudit milieu biologique ou chimique varie. Cette variation d'indice effectif induit une variation de la longueur d'onde de résonance du micro-résonateur. En effet, la longueur d'onde de résonance dépend de l'indice effectif du mode guidé dans le micro-résonateur. Par exemple, pour un chemin optique circulaire de rayon R dans le micro-résonateur, on a :

$$\frac{2\pi}{\lambda} * N_{eff} * 2\pi R = m * 2\pi \qquad (1)$$

avec :

$N_{eff}$ l'indice effectif du mode guidé dans le micro-résonateur;
$\lambda$ la longueur d'onde de résonance (longueur d'onde dudit mode guidé) ; et
$m$ un entier supérieur ou égal à l'unité.

La valeur de la longueur d'onde de résonance peut également permettre de caractériser un milieu biologique ou chimique, en particulier un milieu liquide.

De préférence, les guides d'onde élémentaires sont constitués chacun par un unique matériau.

Avantageusement, les guides d'onde élémentaires présentent tous les mêmes dimensions.

Les guides d'onde élémentaires peuvent être répartis de façon périodique les uns à la suite des autres, selon un pas régulier, dit pas de répartition.

Le pas de répartition est avantageusement inférieur à la longueur d'onde centrale du faisceau lumineux guidé dans le micro-résonateur.

De préférence, le pas de répartition est inférieur à :

$$\frac{\lambda}{2n_h}$$

avec $\lambda$ la longueur d'onde centrale du faisceau lumineux guidé dans le micro-résonateur ; et
$n_h$ l'indice de réfraction moyen des guides d'onde élémentaires.

Le rapport entre la longueur d'un guide d'onde élémentaire, et le pas de répartition, est avantageusement compris entre 0,40 et 0,60.

Le guide d'onde d'injection et/ou extraction peut être constitué d'un même matériau que les guides d'onde élémentaires.

De préférence, les guides d'onde élémentaires présentent chacun la même largeur, et la largeur des guides d'onde élémentaires est strictement supérieure à la largeur du guide d'onde d'injection et/ou extraction.

Le rapport de la largeur des guides d'onde élémentaires, divisée par la largeur du guide d'onde d'injection et/ou extraction, est avantageusement compris entre 1,8 et 2,2.

La largeur des guides d'onde élémentaires et la largeur du guide d'onde d'injection et/ou extraction peuvent être adaptées pour que le guide d'onde d'injection et/ou extraction présente un mode guidé d'indice effectif égal à l'indice effectif d'un mode guidé du micro-résonateur, à plus ou moins 10% près.

De préférence, le micro-résonateur et le guide d'onde d'injection et/ou extraction sont espacés l'un de l'autre.

L'invention concerne également un capteur biologique ou chimique comprenant :

- une source lumineuse, pour l'émission d'un faisceau lumineux dit faisceau d'analyse ;
- un dispositif optique selon l'invention, dans lequel l'un parmi l'au moins un guide d'onde d'injection et/ou extraction est agencé pour recevoir le faisceau lumineux d'analyse, et pour transférer au micro-résonateur au moins une partie du faisceau lumineux d'analyse, à une longueur d'onde de résonance du micro-résonateur ; et
- au moins un photo-détecteur, agencé pour recevoir un faisceau lumineux émis en sortie dudit dispositif optique, et résultant du couplage entre ledit guide d'onde d'injection et/ou extraction et le micro-résonateur.

Selon un mode de réalisation avantageux, le dispositif optique comprend un guide d'onde d'injection et/ou extraction, et :

- la source lumineuse est disposée en entrée du guide d'onde d'injection et/ou extraction ; et
- l'un parmi l'au moins un photo-détecteur est disposé en sortie du guide d'onde d'injection et/ou extraction, agencé pour recevoir un signal correspondant à ce qui reste du faisceau lumineux d'analyse après transit dans le micro-résonateur d'au moins une partie du faisceau lumineux d'analyse.

En complément ou en variante, le dispositif optique comprend un guide d'onde d'injection et un guide d'onde d'extraction, et :

- la source lumineuse est disposée en entrée du guide d'onde d'injection ; et
- l'un parmi l'au moins un photo-détecteur est disposé en sortie du guide d'onde d'extraction, agencé pour recevoir un signal correspondant à ce qui reste de la partie du faisceau d'analyse transférée dans le micro-résonateur, après transit dans ledit microrésonateur.

## BRÈVE DESCRIPTION DES DESSINS

La présente invention sera mieux comprise à la lecture de la description d'exemples de réalisation donnés à titre purement indicatif et nullement limitatif, en faisant référence aux dessins annexés sur lesquels :

- la figure 1 illustre de façon schématique un premier mode de réalisation d'un dispositif optique selon l'invention ;
- la figure 2 illustre de façon schématique une variante du dispositif optique de la figure 1 ;
- la figure 3 illustre un premier mode de réalisation d'un capteur biologique ou chimique selon l'invention, comprenant le dispositif optique de la figure 2 ;
- les figures 4A et 4B représentent un comparatif de la sensibilité d'un capteur chimique selon l'art antérieur, respectivement selon l'invention ;
- la figure 5 illustre un deuxième mode de réalisation d'un capteur biologique ou chimique selon l'invention ; et
- la figure 6 illustre un procédé de fabrication d'un dispositif optique selon l'invention.

## EXPOSÉ DÉTAILLÉ DE MODES DE RÉALISATION PARTICULIERS

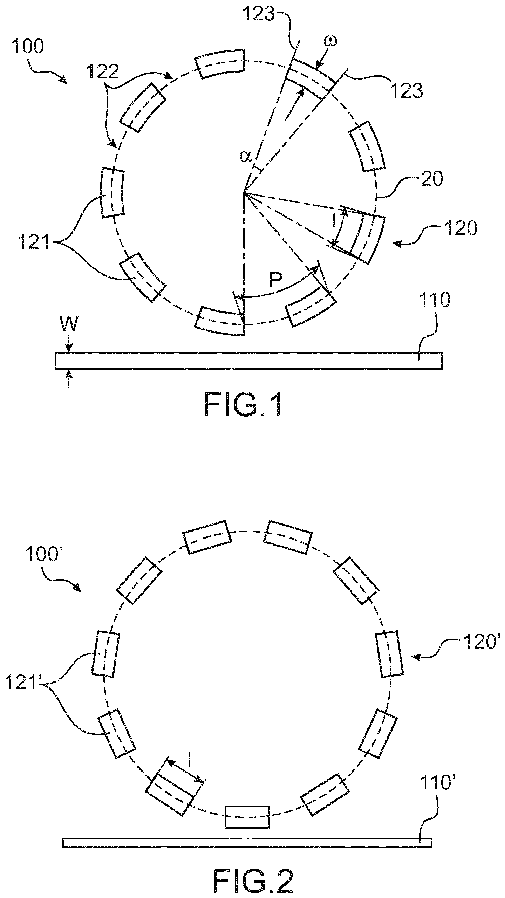

La figure 1 illustre de façon schématique un premier mode de réalisation d'un dispositif optique 100 selon l'invention.

Le dispositif optique 100 est avantageusement destiné à faire partie d'un capteur biologique ou chimique tel que décrit dans la suite.

En fonctionnement, le dispositif optique 100 baigne alors dans un milieu biologique ou chimique.

Le dispositif optique 100 comprend ici :

- un guide d'onde d'injection et extraction 110, configuré pour guider un faisceau lumineux dit faisceau d'analyse ; et
- un micro-résonateur à guide d'onde 120, configuré pour guider au moins une portion du faisceau d'analyse selon un chemin optique 20 en boucle fermée.

Selon l'invention, le micro-résonateur à guide d'onde 120 est constitué d'une pluralité de tronçons de guide d'onde, dits guides d'onde élémentaires 121.

Les guides d'onde élémentaires 121 définissent ensemble le chemin optique 20 parcouru par la lumière dans le micro-résonateur, ici un chemin optique 20 circulaire (représenté en trait pointillé sur la figure 1). En d'autres termes, ils sont agencés les uns à la suite des autres selon un agencement en forme d'anneau.

Les plusieurs guides d'onde élémentaires sont espacés les uns des autres.

En d'autres termes, l'entrée d'un guide d'onde élémentaire n'est pas en contact physique direct avec la sortie d'un guide d'onde élémentaire voisin.

Les guides d'onde élémentaires sont séparés deux à deux par un espace libre respectif 122.

En fonctionnement, ces espaces libres 122 sont occupés par le milieu biologique ou chimique dans lequel baigne le micro-résonateur 120.

Chacun des guides d'onde élémentaires 121 est dépourvu de gaine, de sorte qu'en fonctionnement, c'est le milieu biologique ou chimique dans lequel ils baignent qui fait office de gaine.

Chaque guide d'onde élémentaire 121 est donc avantageusement constitué d'un même et unique matériau.

Ce matériau est le même pour tous les guides d'onde élémentaires 121.

Les guides d'onde élémentaires sont avantageusement en silicium ou en nitrure de silicium.

Ils sont par exemple en silicium, pour guider un faisceau lumineux dans l'infrarouge (longueur d'onde supérieure à 1 $\mu$m, en particulier comprise entre 1 $\mu$m et 10 $\mu$m).

En variante, les guides d'onde élémentaires 121 sont en nitrure, en particulier du nitrure de silicium ($Si_3N_4$), pour guider un faisceau lumineux dans le visible (longueur d'onde strictement inférieure à 1 $\mu$m, en particulier comprise entre 0,4 $\mu$m et 0,8 $\mu$m).

On peut considérer que le micro-résonateur 120 forme un micro-résonateur en anneau segmenté, c'est-à-dire un micro-résonateur tel que décrit en introduction, dans lequel seuls certains tronçons du guide d'onde courbé sont conservés, et forment les guides d'onde élémentaires.

En fonctionnement, la lumière guidée dans le micro-résonateur 120 s'étend en partie dans le milieu biologique ou chimique environnant lorsqu'elle traverse un guide d'onde élémentaire 121, ledit milieu formant la gaine de ce guide d'onde élémentaire 121.

En outre, la lumière guidée dans le micro-résonateur 120 s'étend en totalité dans le milieu biologique ou chimique environnant lorsqu'elle traverse un espace libre 122, en passant d'un guide d'onde élémentaire 121 au suivant.

Par conséquent, l'influence du milieu biologique ou chimique sur la lumière guidée dans le micro-résonateur 120 est élevée, supérieure à son influence dans un micro-résonateur en anneau tel que décrit en introduction.

Cette plus forte influence se traduit en particulier par une plus grande variation de l'absorption par ledit milieu, lorsque la composition dudit milieu varie.

Lorsque l'indice de réfraction d'un composant du milieu biologique ou chimique est élevé, par exemple supérieur à 2, une variation de la concentration de ce composant dans ledit milieu se traduit par une forte variation de l'indice de réfraction. Cette variation d'indice de réfraction se retrouve dans le déphasage apporté par un tour dans le micro-résonateur, et donc sur la valeur de la longueur d'onde de résonance du micro-résonateur. Ainsi, la plus forte influence du milieu environnant, dans un micro-résonateur selon l'invention, peut se traduire en outre par une plus grande variation de la valeur de la longueur d'onde de résonance, lorsque la composition dudit milieu varie.

L'invention permet ainsi d'augmenter la sensibilité au milieu environnant du micro-résonateur, et donc d'un dispositif optique et d'un capteur biologique ou chimique selon l'invention.

Le micro-résonateur 120 est disposé à proximité du guide d'onde d'injection et extraction 110.

Au niveau du micro-résonateur 120, le guide d'onde d'injection et extraction 110 s'étend selon une ligne droite, parallèle à une tangente au micro-résonateur.

Le guide d'onde d'injection et extraction 110 s'étend à l'extérieur du micro-résonateur 120, sans forcément de contact physique direct avec celui-ci.

Dans la suite, on illustre, mais de manière non limitative, un exemple dans lequel le guide d'onde d'injection et extraction 110 est espacé du micro-résonateur 120.

Le micro-résonateur 120 et le guide d'onde d'injection et extraction 110 sont couplés optiquement l'un à l'autre par couplage évanescent.

En fonctionnement, le guide d'onde d'injection et extraction 110 reçoit en entrée un faisceau lumineux dit d'analyse.

Au moins une partie du faisceau d'analyse est transférée dans le micro-résonateur à guide d'onde 120, par couplage évanescent.

La partie du faisceau d'analyse transférée dans le micro-résonateur à guide d'onde 120 est un signal à une longueur d'onde de résonance du micro-résonateur 120.

Il peut s'agir de tout ou partie du faisceau d'analyse.

Une longueur d'onde de résonance du micro-résonateur est une longueur d'onde pour laquelle le déphasage apporté par un tour dans le micro-résonateur est un multiple de $2\pi$. De préférence, une seule longueur d'onde de résonance est exploitée, nommée « la longueur d'onde de résonance ».

La partie du faisceau d'analyse transférée dans le micro-résonateur forme donc le faisceau lumineux guidé par le micro-résonateur. En d'autres termes, cette partie du faisceau d'analyse correspond à la lumière guidée dans le micro-résonateur 120, soumise à l'influence de l'environnement extérieur, ici le milieu biologique ou chimique dans lequel baigne le micro-résonateur.

Dans l'exemple illustré en figure 1, le dispositif 100 comprend un unique guide d'onde d'injection et extraction.

Ainsi, au moins une partie du faisceau d'analyse est transférée du guide d'onde d'injection et extraction 110 vers le micro-résonateur à guide d'onde 120, où elle effectue plusieurs tours avant de revenir dans le même guide d'onde d'injection et extraction 110.

Comme détaillé dans la suite, toute la lumière ne revient pas dans le guide d'onde d'injection et extraction 110, du fait des pertes lors de la propagation dans le micro-résonateur 120. Ces pertes peuvent même être de 100%.

De préférence, le guide d'onde d'injection et extraction 110 est constitué, comme les guides d'onde élémentaires 120, d'un unique matériau, le milieu biologique ou chimique environnant faisant office de gaine.

Cet unique matériau est avantageusement le même que le matériau constituant les guides d'onde élémentaires.

On a décrit ci-dessus une utilisation du dispositif optique 100 pour un capteur biologique ou chimique.

En variante, le dispositif optique 100 peut être utilisé pour d'autres utilisations dans lesquelles il est connu d'utiliser un résonateur optique. Par exemple, le dispositif optique 100 peut être utilisé pour un capteur de mouvement (déplacement, accélération, mouvement linéaire ou rotation).

La constitution du micro-résonateur selon l'invention en plusieurs éléments indépendants présente également des avantages dans le cadre d'un capteur de mouvement (plus grande sensibilité aux contraintes mécaniques, possibilité de faire bouger un élément mécanique externe entre deux guides d'onde élémentaires).

On détaille dans la suite des règles avantageuses de dimensionnement du dispositif optique 100.

Le micro-résonateur, ici en forme d'anneau, présente avantageusement un rayon externe inférieur ou égale à 10 $\mu$m, en particulier inférieur ou égal à 5 $\mu$m.

De préférence, tous les guides d'onde élémentaires présentent la même forme et les mêmes dimensions.

La forme d'un guide d'onde élémentaire 121 est ici une portion d'un cylindre droit à base annulaire, cette portion étant délimitée par deux plans 123 recevant la génératrice du cylindre et définissant ensemble un angle $\alpha$.

Chaque guide d'onde élémentaire 121 est caractérisé par une hauteur, une largeur $w$ et une longueur $l$ (ici $l$ est une longueur curviligne, mesurée au centre du guide d'onde élémentaire).

Les différents guides d'onde élémentaires 121 sont répartis de façon périodique les uns à la suite des autres, selon un pas régulier $P$, dit pas de répartition.

Ici, le pas $P$ désigne une longueur curviligne, correspondant à la longueur curviligne d'un guide d'onde élémentaire 121 et d'un espace libre 122. Il s'agit en d'autres termes de la longueur curviligne d'une portion du chemin optique 20, suivi par la lumière au centre d'un guide d'onde élémentaire 121 et dans l'espace libre 122 adjacent.

Afin que la structure en guides d'onde élémentaires indépendants n'affecte pas le faisceau lumineux guidé dans le micro-résonateur, le pas $P$ est inférieur à la longueur d'onde centrale de ce faisceau lumineux.

A cette échelle, la lumière n'est sensible qu'à un indice de réfraction moyen entre l'indice des guides d'onde élémentaires 121 et l'indice dans les espaces libres 122, et n'est pas diffractée.

En d'autres termes, le cœur du micro-résonateur 120 se comporte comme un matériau d'indice de réfraction moyen :

$$n_{moy} = \sqrt{\frac{l}{P} n_h^2 + \frac{P-l}{P} n_b^2} \qquad (2)$$

avec :

*l* la longueur curviligne d'un guide d'onde élémentaire ;

*P* le pas de répartition des guides d'onde élémentaires ;

$n_h$ l'indice de réfraction moyen dans un guide d'onde élémentaire ; et

$n_b$ l'indice de réfraction moyen entre deux guides d'onde élémentaires, c'est-à-dire l'indice de réfraction moyen du milieu biologique ou chimique entourant les guides d'onde élémentaires.

De préférence, le pas *P* vérifie en particulier :

$$P < \frac{\lambda}{2n_{moy}} \qquad (3)$$

avec :

$\lambda$ la longueur d'onde centrale du faisceau lumineux qui se propage dans le micro-résonateur, ou en d'autres termes une longueur d'onde de résonance du micro-résonateur, ou en d'autres termes la longueur d'onde de résonance exploitée du micro-résonateur.

On a même avantageusement :

$$P < \frac{\lambda}{2n_h} \qquad (4)$$

avec : $n_h$ l'indice de réfraction moyen dans un guide d'onde élémentaire.

Ici, les guides d'onde élémentaires sont constitués d'un seul et même matériau, donc $n_h$ est l'indice de réfraction des guides d'onde élémentaires.

En pratique, le pas de répartition *P* est avantageusement inférieur à 3 $\mu$m, et même inférieur à 2 $\mu$m, voire 1 $\mu$m.

Selon l'invention, le micro-résonateur 120 présente un mode guidé d'indice effectif sensiblement égal à l'indice effectif d'un mode guidé du guide d'onde d'injection et extraction 110, de préférence exactement égal.

Par sensiblement égal, on entend égal à plus ou moins 1% près, voire à plus ou moins 5 % près voire même à plus ou moins 10% près.

Pour rappel, l'indice effectif d'un mode, notamment l'indice effectif d'un mode guidé d'un guide d'onde, est défini de la façon suivante :

$$N_{eff} = \beta * \frac{\lambda}{2\pi} \qquad (5)$$

avec :

$N_{eff}$ l'indice effectif du mode considéré ;

$\lambda$ la longueur d'onde du faisceau lumineux se propageant dans le guide d'onde ; et

$\beta$ la constante de phase du guide d'onde.

La constante de phase $\beta$ dépend de la longueur d'onde et du mode du faisceau lumineux se propageant dans le guide d'onde, ainsi que des propriétés de ce guide d'onde (en particulier indices de réfraction et géométrie).

La constante de phase $\beta$ est définie par : $A(z) = A(0)\exp(\gamma z)$, où *z* est une abscisse selon un chemin de propagation dans le guide d'onde, $A(z)$ est l'amplitude complexe en fonction de *z* d'un faisceau lumineux se propageant dans le guide d'onde, et $\beta$ est la partie imaginaire de $\gamma$

On peut parfois considérer que l'indice effectif désigne l'indice optique moyen du milieu tel qu'il est « vu » par un mode du faisceau lumineux se propageant dans le guide d'onde.

De préférence, le mode guidé dans le micro-résonateur, respectivement dans le guide d'onde d'injection et extraction, est un mode d'ordre zéro, généralement quasigaussien (mode fondamental).

Le guide d'onde d'injection et extraction 110 étant formé d'un seul tenant, et le micro-résonateur 120 étant formé segmenté, la condition ci-dessus sur les indices effectifs des modes guidés se traduit avantageusement par une condition sur les largeurs respectives du guide d'onde d'injection et extraction 110 et des guides d'onde élémentaires 121.

Avantageusement, on a :

$$w > W \qquad\qquad (6)$$

avec :

> $w$ la largeur d'un guide d'onde élémentaire 121, mesurée dans un plan orthogonal au chemin optique 20 parcouru par la lumière dans le micro-résonateur 120 ; et
> $W$ la largeur du guide d'onde d'injection et extraction 110, mesurée dans un plan orthogonal au chemin optique parcouru par la lumière dans le guide d'onde d'injection et extraction 110.

En pratique, chaque guide d'onde élémentaire 121 présente de préférence une section rectangulaire de hauteur $h_1$ et de largeur $w$, dans des plans orthogonaux au chemin optique 20 parcouru par la lumière dans le micro-résonateur 120. De la même façon, le guide d'onde d'injection et extraction 110 présente avantageusement une section rectangulaire de hauteur $h_1 = h_2$ et de largeur $W$, dans des plans orthogonaux au chemin optique parcouru par la lumière dans le guide d'onde d'injection et extraction 110.

L'équation (6) est notamment vérifiée lorsque le guide d'onde d'injection et extraction 110 est constitué du même matériau que les guides d'onde élémentaires 121, et présente donc le même indice de réfraction.

Les largeurs $w$ et $W$ permettant de vérifier la condition ci-dessus sur les indices effectifs des modes guidés, peuvent être calculées avec précision en utilisant des outils de simulation électromagnétique connus de l'homme de l'art. Ces outils de simulation peuvent être utilisés pour ajuster les différents paramètres du dispositif optique 100, de façon à vérifier ladite condition. Ces paramètres sont notamment des paramètres géométriques (pas de répartition $P$, longueur curviligne $l$ d'un guide d'onde élémentaire), et des valeurs d'indice de réfraction (indices de réfraction du guide d'onde d'injection et extraction et indice de réfraction des guides d'onde élémentaires).

En particulier, on peut déterminer une valeur optimale du rapport entre les largeurs $w$ et $W$.

Le rapport de la largeur $w$ divisée par la largeur $W$ est sensiblement égal à 2, avantageusement compris entre 1,9 et 2,1, et même entre 1,8 et 2,2.

De préférence, le rapport entre la longueur curviligne $l$ d'un guide d'onde élémentaire et le pas de répartition $P$ est sensiblement égal à 0,5. En particulier, ce rapport est avantageusement compris entre 0,4 et 0,6, voire entre 0,45 et 0,55, voire exactement égal à 0,5.

En d'autres termes, les espaces libres présentent environ la même longueur curviligne que les guides d'onde élémentaires, ce qui correspond au meilleur compromis technologique puisque ni les guides d'onde élémentaires ni les espaces libres n'ont à présenter de dimensions trop réduites.

De préférence, on a à la fois un rapport d'environ 0,5 entre la longueur curviligne $l$ et le pas $P$, et un rapport de la largeur $w$ divisée par la largeur $W$ sensiblement égal à 2.

La figure 2 illustre de façon schématique une variante du dispositif optique de la figure 1.

Le dispositif optique 100' illustré en figure 2 ne diffère du dispositif de la figure 1 qu'en ce que les guides d'onde élémentaires 121' du micro-résonateur 120' présentent chacun une forme de parallélépipède rectangle.

Les dimensions d'un guide d'onde élémentaire sont définies notamment par la longueur $l$, qui dans ce cas n'est plus curviligne.

Le pas de répartition des guides d'onde élémentaires 121' étant réduit, de préférence inférieur à 2 $\mu$m, le chemin optique de la lumière guidée dans le micro-résonateur 120' peut être assimilé à un chemin optique circulaire.

Selon cette variante, le guide d'onde d'injection et extraction 110' s'étend de préférence parallèle à l'un des guides d'onde élémentaires 121'.

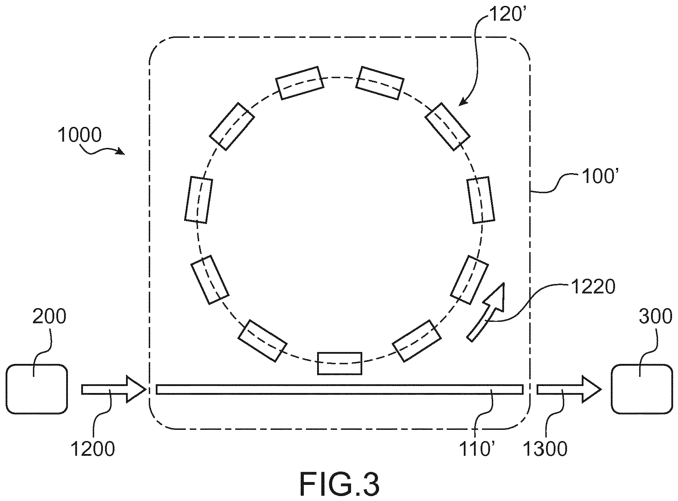

La figure 3 illustre un premier mode de réalisation d'un capteur biologique ou chimique 1000 selon l'invention, comprenant un dispositif optique selon l'invention, ici le dispositif optique 100' de la figure 2.

Un tel capteur forme par exemple, mais de manière non limitative, un capteur de gaz, pour mesurer la concentration d'un gaz prédéterminé dans un milieu, dit milieu chimique.

Le capteur 1000 selon l'invention comprend :

- une source lumineuse 200, adaptée à l'émission d'un faisceau lumineux dit faisceau d'analyse 1200, de préférence un laser, adapté à l'émission d'un faisceau monochromatique ;
- le dispositif 100' ; et
- un photo-détecteur 300, adapté à mesurer l'intensité lumineuse d'un faisceau incident.

Le faisceau d'analyse 1200 est centrée ici sur une longueur d'onde d'environ 4320 nm.

La source lumineuse 200 est disposée en entrée du guide d'onde d'injection et extraction 110', c'est-à-dire à proximité d'une première extrémité de celui-ci, pour l'injection du faisceau d'analyse 1200 dans ledit guide d'onde 110'.

Le faisceau d'analyse 1200 se propage dans le guide d'onde d'injection et extraction 110', jusqu'à proximité du micro-résonateur 120', où au moins une partie 1220 du faisceau d'analyse entre dans le micro-résonateur et y effectue plusieurs tours.

Selon un premier mode de réalisation, le faisceau d'analyse 1200 est un faisceau monochromatique, centré sur la longueur d'onde de résonance du micro-résonateur 120', et de largeur spectrale inférieure ou égale à 10 nm. Dans ce cas, la partie 1220 du faisceau d'analyse qui entre dans le micro-résonateur 110' correspond en fait à l'ensemble du faisceau d'analyse 1200.

En variante, le faisceau d'analyse est un faisceau large spectre, de largeur spectrale supérieure à 10 nm, par exemple supérieure à 100 nm. Dans ce cas, la partie 1220 du faisceau d'analyse qui entre dans le micro-résonateur 110' correspond à une sélection spectrale du faisceau d'analyse, centrée sur la longueur d'onde de résonance du micro-résonateur 120'.

Au cours de son transit dans le micro-résonateur 120', ladite partie 1220 du faisceau d'analyse subit des pertes qui sont dues :

- à la courbure du chemin optique, entraînant des pertes vers des modes radiatifs ;
- éventuellement, à la rugosité des guides d'onde élémentaires (pertes mineures) ; et
- surtout, à l'absorption par le milieu biologique ou chimique environnant.

L'absorption par le milieu biologique ou chimique environnant est d'autant plus importante, que ladite partie 1220 du faisceau d'analyse est confinée pendant une durée importante (du fait des plusieurs tours) dans un composant compact (le micro-résonateur).

En outre, la structure astucieuse du micro-résonateur selon l'invention augmente encore l'absorption par le milieu environnant.

Ladite partie 1220 du faisceau d'analyse revient ensuite dans le guide d'onde d'injection et extraction 110', diminuée des pertes liées au transit dans le micro-résonateur 120'. Comme détaillé ci-avant, le retour dans le guide d'onde d'injection et extraction 110' se fait également par couplage évanescent.

Le faisceau lumineux 1300 en sortie du guide d'onde d'injection et extraction 110' correspond donc au faisceau d'analyse 1200, diminué des pertes dans le micro-résonateur.

Parmi les plusieurs types de pertes listés ci-dessus, seule l'absorption par le milieu biologique ou chimique environnant varie fortement en fonction de la composition de ce milieu.

Par conséquent, l'analyse du faisceau lumineux 1300 en sortie du guide d'onde d'injection et extraction 110' permet d'obtenir des informations sur ledit milieu biologique ou chimique, par exemple une concentration d'un gaz d'intérêt.

Cette analyse est réalisée grâce au photo-détecteur 300, disposé en sortie du guide d'onde d'injection et extraction 110', c'est-à-dire à proximité d'une seconde extrémité de celui-ci, pour recevoir le faisceau lumineux 1300 émergeant dudit guide d'onde 110'.

De préférence, la distance entre le guide d'onde d'injection et extraction 110' et le micro-résonateur 120' selon l'invention, est adaptée pour que la transmission par le dispositif optique selon l'invention, à la longueur d'onde de résonance du micro-résonateur, soit minimale pour une concentration nulle de ce gaz d'intérêt dans le milieu environnant.

On parle communément de « couplage critique », pour désigner le couplage associé à cette transmission minimale, correspondant par exemple à un taux de transmission inférieur à 10%.

Ensuite, la transmission à la longueur d'onde de résonance du micro-résonateur est d'autant plus importante que la concentration en gaz d'intérêt dans le milieu environnant est élevée.

En pratique, le couplage critique est atteint pour une distance entre le guide d'onde d'injection et extraction et le micro-résonateur, inférieure à la distance associée au couplage critique dans un dispositif selon l'art antérieur tel que décrit en introduction.

Selon l'invention, la distance entre le guide d'onde d'injection et extraction 110' et le micro-résonateur 120' est par exemple d'environ 50 nm, comprise entre 70 nm et 30 nm (distance mesurée bord à bord).

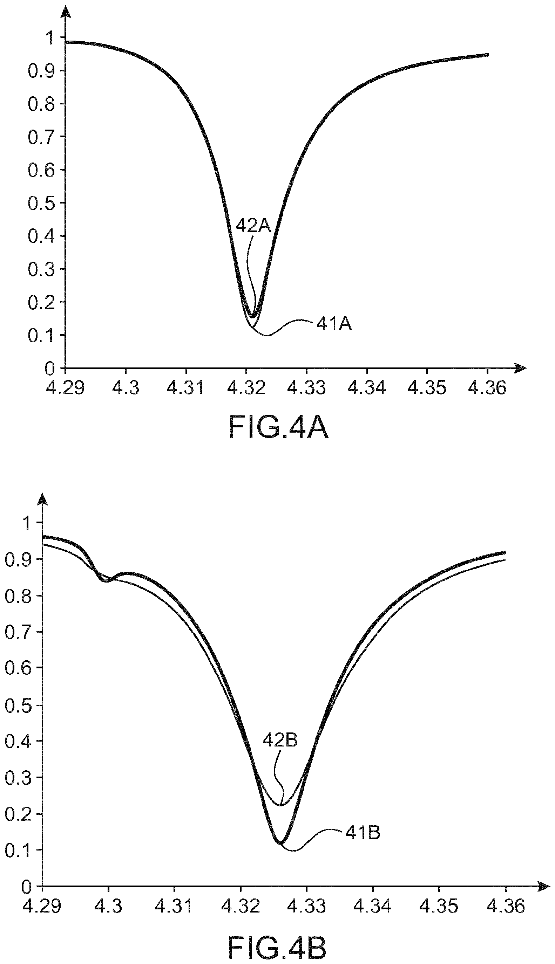

Les figures 4A et 4B représentent les spectres de transmission autour de la longueur d'onde de résonance, d'un capteur de gaz selon l'art antérieur tel que décrit en introduction, respectivement d'un capteur de gaz selon l'invention tel qu'illustré en figure 3.

Dans les deux cas, le guide d'onde d'injection et extraction et le micro-résonateur sont en silicium, d'indice de réfraction $n_h$=3,4, et le faisceau d'analyse est centré sur environ 4,3 $\mu$m, pour mesurer une concentration en dioxyde de carbone ($CO_2$) dans le milieu environnant.

Afin de faciliter la compréhension de l'invention, on a représenté ici le cas d'un faisceau d'analyse large spectre.

Dans les deux cas, le micro-résonateur présente un diamètre externe réduit, de préférence moins de 20 $\mu$m, et même moins de 10 $\mu$m.

Les deux micro-résonateurs présentent une résonance de même facteur de qualité, ce qui correspond à de mêmes temps de séjour respectifs des photons dans les micro-résonateurs.

On note que le facteur de qualité minimal est ici limité par les pertes par courbure.

La figure 4A correspond au capteur de gaz selon l'art antérieur.

L'axe des abscisses est gradué en μm, et correspond à une longueur d'onde.

L'axe des ordonnées est sans unité, et correspond à un taux de transmission allant de 0 à 1.

La courbe 41A correspond à une concentration en $CO_2$ de 0 ppm (parties par million), et présente un minimum de transmission d'environ 0,1 à environ 4,32 μm.

La courbe 42A correspond à une concentration en $CO_2$ de 1000 ppm, et présente un minimum de transmission d'environ 0,15 à environ 4,32 μm.

La variation du taux de transmission entre les concentrations 0 ppm et 1000 ppm est de 3,24%.

On a également déterminé la variation du taux de transmission entre les concentrations 0 ppm et 100 ppm, qui est de 0,34%.

La figure 4B correspond au capteur de gaz selon l'invention.

La courbe 41B correspond à une concentration en $CO_2$ de 0 ppm, et présente un minimum de transmission de 0,1 à environ 4,33 μm.

La courbe 42B correspond à une concentration en $CO_2$ de 1000 ppm, et présente un minimum de transmission de 0,22 à environ 4,33 μm.

La variation du taux de transmission entre les concentrations 0 ppm et 1000 ppm est de 10,23%.

On a également déterminé la variation du taux de transmission entre les concentrations 0 ppm et 100 ppm, qui est de 1,15%.

Ainsi, pour chaque concentration en gaz, la variation du taux de transmission à la longueur d'onde de résonance, entre ladite concentration en gaz et une concentration nulle de ce gaz, est multipliée par 3 grâce à l'invention.

L'invention permet donc d'améliorer la sensibilité d'un capteur de gaz. La sensibilité est augmentée d'un facteur au moins égal à 3, en comparaison avec un capteur du même type selon l'art antérieur.

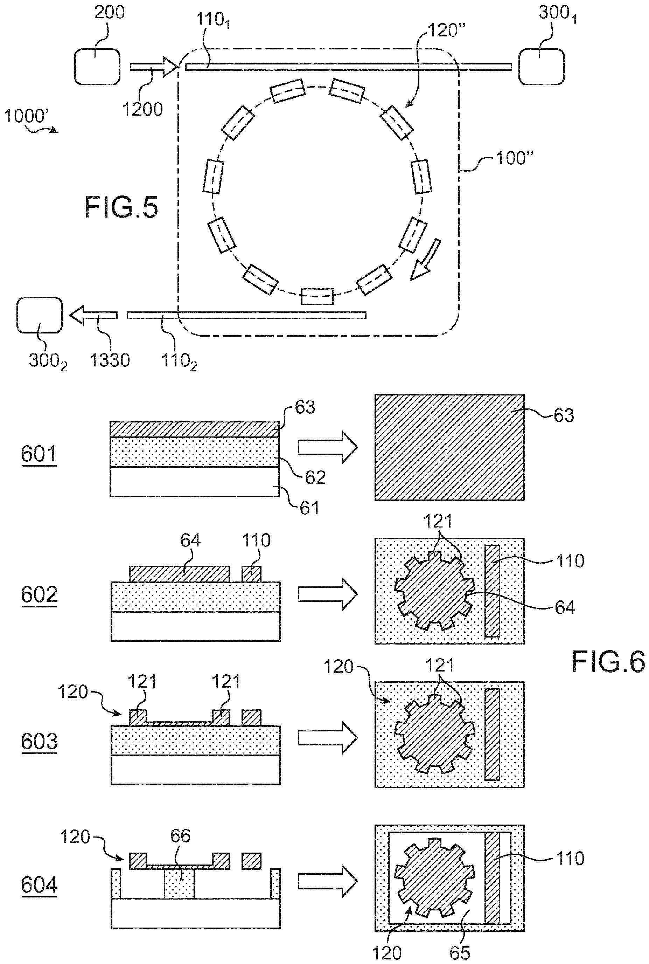

La figure 5 illustre un deuxième mode de réalisation d'un capteur biologique ou chimique 1000' selon l'invention, comprenant un dispositif optique 100" selon l'invention.

Le dispositif optique 100" correspond au dispositif optique décrit en référence à la figure 2, excepté qu'il présente, au lieu du guide d'injection et extraction, un guide d'onde d'injection $110_1$ et un guide d'onde d'extraction $110_2$ distincts l'un de l'autre.

Ici, le guide d'onde d'injection $110_1$ et le guide d'onde d'extraction $110_2$ sont parallèles entre eux, et couplés tous deux au micro-résonateur 120"par couplage évanescent.

La source lumineuse 200 est disposée en entrée du guide d'onde d'injection $110_1$.

Un premier photo-détecteur $300_1$, optionnel, est disposé ici en sortie du guide d'onde d'injection $110_1$, pour la détection d'un signal comme décrit en référence à la figure 3. Dans ce cas, le guide d'onde d'injection $110_1$ peut également être nommé guide d'onde d'injection et extraction.

Un second photo-détecteur $300_2$ est disposé en sortie du guide d'onde d'extraction $110_2$. La sortie du guide d'onde d'extraction $110_2$ correspond ici à l'extrémité dudit guide d'onde, disposée du même côté du micro-résonateur que la source lumineuse 200.

En fonctionnement, la source lumineuse 200 émet le faisceau d'analyse 1200 qui se propage dans le guide d'onde d'injection $110_1$. Une partie du faisceau d'analyse, à la longueur d'onde de résonance du micro-résonateur, est transférée au micro-résonateur avant d'être couplée vers le guide d'onde d'extraction $110_2$ puis détectée par le photo-détecteur $300_2$.

Ce photo-détecteur $300_2$ reçoit donc uniquement une partie 1330 du faisceau d'analyse ayant transité par le micro-résonateur.

Le photo-détecteur $300_2$ est particulièrement avantageux lorsque la source lumineuse 200 est une source large bande. Dans ce cas, bien que le faisceau d'analyse soit large bande, le photo-détecteur $300_2$ reçoit un signal monochromatique à la longueur d'onde de résonance du micro-résonateur. Le photo-détecteur $300_2$ est alors plus sensible à l'effet du milieu environnant, puisqu'il ne reçoit que la longueur d'onde affectée par ce milieu, et qui transite dans le micro-résonateur.

Au contraire, le photo-détecteur $300_1$, optionnel, reçoit un signal large bande dans lequel l'effet du milieu environnant, à la longueur d'onde de résonance du micro-résonateur, est noyé au milieu des longueurs d'onde non affectées par ledit milieu.

L'utilisation d'un signal large bande peut être avantageuse, par exemple lorsqu'on ne connaît pas avec précision la valeur de la longueur d'onde de résonance du micro-résonateur, celle-ci étant influencée par la composition du milieu environnant.

Cette influence, négligeable dans un milieu de faible indice tel qu'un milieu gazeux, est plus importante dans un milieu de fort indice tel qu'un milieu liquide.

Le capteur 1000' est donc avantageusement un capteur pour identifier une espèce biologique chimique et/ou déterminer sa concentration, dans un milieu liquide.

On note que le guide d'onde d'injection et extraction 110 ou 110' mentionné en référence aux figures 1 à 3, le guide d'onde d'injection $110_1$, et le guide d'onde d'extraction $110_2$, sont tous des guides d'onde couplés optiquement par évanescence au micro-résonateur. Ces guides d'onde peuvent être désignés chacun par le terme « guide d'onde d'injection et/ou extraction ».

La figure 6 illustre de façon schématique un exemple d'un procédé de fabrication d'un dispositif optique selon l'invention, en particulier un dispositif 100 tel que décrit en référence à la figure 1.

A gauche, le dispositif en cours de fabrication est représenté selon une vue en coupe.

A droite, le dispositif en cours de fabrication est représenté selon une vue de dessus.

Le procédé de fabrication utilise un empilement dit SOI (pour « *Silicon On Insulator* »), constitué des trois couches suivantes superposées : un substrat 61 (par exemple en silicium), une couche intermédiaire 62 en dioxyde de silicium, et une couche supérieure 63 en silicium (point de départ 601, à la figure 6).

Au cours d'une première étape 602, on grave la couche supérieure 63 en silicium sur toute son épaisseur, ici pour former le guide d'onde d'injection et extraction 110 et un disque cranté 64 en silicium. Chaque cran du disque cranté 64 correspond à un guide d'onde élémentaire 121 du micro-résonateur.

Le procédé selon l'invention comprend ensuite une étape 603 de gravure du disque 64, sur une partie seulement de son épaisseur. Au cours de cette étape 603, on grave le disque 64 dans une région centrale de celui-ci, pour former le micro-résonateur 120.

La gravure conserve une faible épaisseur de la région centrale du disque 64, ce qui permet d'assurer la tenue mécanique du micro-résonateur 120, et en particulier de maintenir solidaires entre eux les guides d'onde élémentaires 121.

Selon une variante non représentée, on grave, à l'étape 602, un disque plein (et non un disque cranté). A l'étape 603, on grave le disque plein sur une partie de son épaisseur, dans une région centrale et dans des régions annulaires de celui-ci. Les guides d'onde élémentaires sont ainsi formés à l'étape 603, disposés ici sur un disque résiduel de faible épaisseur.

Enfin, dans une étape 604, on grave la couche intermédiaire 62 sur toute son épaisseur pour former une cavité 65 sous le micro-résonateur 120 et le guide d'onde d'injection et extraction 110. La gravure conserve, sous le micro-résonateur 120, un pilier 66 pour maintenir le micro-résonateur 120 suspendu au-dessus du substrat 61. Le pilier 66 est approximativement centré sur le centre du micro-résonateur 120.

La couche intermédiaire subsistant autour de la cavité 65 sert notamment au maintien mécanique du guide d'onde d'injection et extraction 110, en suspension au-dessus du substrat 61.

La gravure est ici une gravure humide au temps.

Chacune des gravures utilise de préférence un masque de gravure.

En pratique, les différents guides d'onde élémentaires d'un micro-résonateur selon l'invention sont donc avantageusement reliés entre eux par une fine épaisseur de matériau, qui s'étend au moins dans une région centrale du micro-résonateur. Cette fine épaisseur de matériau peut s'étendre directement sous le micro-résonateur, sous une région centrale de celui-ci et jusque sous les guides d'onde élémentaires.

Le micro-résonateur est en appui sur un pilier central partant du centre de cette fine épaisseur de matériau. De préférence, la largeur du pilier central est au moins deux fois inférieure à celle du micro-résonateur.

L'invention n'est pas limitée aux exemples décrits ci-dessus, et on pourra réaliser de nombreuses variantes sans sortir du cadre de l'invention.

Par exemple, les guides d'onde élémentaires ne sont pas agencés selon une forme d'anneau, mais selon une autre forme de boucle fermée.

Par exemple, l'agencement des guides d'onde élémentaires peut avoir la forme de deux demi-anneaux reliés par deux segments, ou de quatre quarts d'anneau reliés par quatre segments.

Le dispositif optique selon l'invention peut également comprendre une pluralité de micro-résonateurs selon l'invention, couplés optiquement entre eux par un couplage évanescent.

Le capteur comprenant un tel dispositif optique peut être un capteur de gaz, ou de tout autre élément chimique dans un milieu gazeux ou liquide. Il s'agit en particulier d'un capteur de concentration, par exemple un capteur de concentration en $CO_2$ dans un milieu gazeux, ou un capteur de concentration en glucose dans un milieu liquide.

La source lumineuse et le photo-détecteur du capteur selon l'invention peuvent être intégrés avec le dispositif optique sur un même substrat, ou déportés.

En figures 3 et 5, on a représenté l'exemple de capteurs dans lesquels les guides d'onde élémentaires sont des tronçons droits. En variante, ils peuvent prendre la forme de tronçons arrondis, comme en figure 1.

**Revendications**

1. Dispositif optique (100 ; 100' ; 100") comprenant :

   - un micro-résonateur à guide d'onde (120 ; 120' ; 120"), agencé pour guider un faisceau lumineux selon un chemin optique en boucle fermée (20) ; et
   - au moins un guide d'onde d'injection et/ou extraction (110 ; 110' ; $110_1$, $110_2$), couplé optiquement au micro-résonateur pour l'injection et/ou l'extraction dudit faisceau lumineux ;

   dans lequel le micro-résonateur (120 ; 120' ; 120") est constitué d'une pluralité de guides d'onde élémentaires (121; 121') espacés les uns des autres de sorte que l'entrée d'un guide d'onde élémentaire n'est pas en contact physique direct avec la sortie d'un guide d'onde élémentaire voisins, séparés deux à deux par des espaces libres configurés pour, en utilisation, être occupés par un milieu gazeux ou liquide, et disposés les uns à la suite des autres selon un agencement en forme de boucle ;
   **caractérisé en ce que** le dispositif optique comporte en outre un substrat (61) et un pilier central (66), avec le micro-résonateur à guide d'onde (120 ; 120' ; 120") agencé suspendu au-dessus du substrat (61), en appui sur le pilier central (66).

2. Dispositif (100 ; 100' ; 100") selon la revendication 1, **caractérisé en ce que** les guides d'onde élémentaires (121 ; 121') sont constitués chacun par un unique matériau.

3. Dispositif (100 ; 100' ; 100") selon la revendication 1 ou 2, **caractérisé en ce que** les guides d'onde élémentaires (121 ; 121') présentent tous les mêmes dimensions.

4. Dispositif (100 ; 100'; 100") selon l'une quelconque des revendications 1 à 3, **caractérisé en ce que** les guides d'onde élémentaires (121; 121') sont répartis de façon périodique les uns à la suite des autres, selon un pas régulier (P) dit pas de répartition.

5. Dispositif (100 ; 100' ; 100") selon la revendication 4, **caractérisé en ce que** le pas de répartition (P) est inférieur à la longueur d'onde centrale du faisceau lumineux guidé dans le micro-résonateur.

6. Dispositif (100 ; 100' ; 100") selon la revendication 5, **caractérisé en ce que** le pas de répartition (P) est inférieur à :

$$\frac{\lambda}{2n_h}$$

   avec $\lambda$ la longueur d'onde centrale du faisceau lumineux guidé dans le micro-résonateur (120; 120' ; 120") ; et $n_h$ l'indice de réfraction moyen des guides d'onde élémentaires (121; 121').

7. Dispositif (100 ; 100'; 100") selon l'une quelconque des revendications 4 à 6, **caractérisé en ce que** le rapport entre la longueur (l) d'un guide d'onde élémentaire (121 ; 121'), et le pas de répartition (P), est compris entre 0,40 et 0,60.

8. Dispositif (100 ; 100' ; 100") selon l'une quelconque des revendications 1 à 7, **caractérisé en ce que** le guide d'onde d'injection et/ou extraction (110 ; 110' ; $110_1$, $110_2$) est constitué d'un même matériau que les guides d'onde élémentaires (121 ; 121').

9. Dispositif (100 ; 100' ; 100") selon l'une quelconque des revendications 1 à 8, **caractérisé en ce que** les guides d'onde élémentaires (121; 121') présentent chacun la même largeur (*w*), et **en ce que** la largeur (*w*) des guides d'onde élémentaires est strictement supérieure à la largeur (*W*) du guide d'onde d'injection et/ou extraction (110 ; 110' ; $110_1$, $110_2$).

10. Dispositif (100 ; 100' ; 100") selon la revendication 9, **caractérisé en ce que** le rapport de la largeur (w) des guides d'onde élémentaires (121 ; 121'), divisée par la largeur (*W*) du guide d'onde d'injection et/ou extraction (110 ; 110' ; $110_1$, $110_2$), est compris entre 1,8 et 2,2.

11. Dispositif (100 ; 100' ; 100") selon la revendication 9 ou 10, **caractérisé en ce que** la largeur (w) des guides d'onde élémentaires (121 ; 121') et la largeur (*W*) du guide d'onde d'injection et/ou extraction (110 ; 110' ; $110_1$, $110_2$) sont

adaptées pour que le guide d'onde d'injection et/ou extraction présente un mode guidé d'indice effectif égal à l'indice effectif d'un mode guidé du micro-résonateur, à plus ou moins 10% près.

**12.** Dispositif (100 ; 100' ; 100") selon l'une quelconque des revendications 1 à 11, **caractérisé en ce que** le micro-résonateur (120 ; 120' ; 10") et le guide d'onde d'injection et/ou extraction (110 ; 110' ; $110_1$, $110_2$) sont espacés l'un de l'autre.

**13.** Capteur biologique ou chimique (1000 ; 1000'), **caractérisé en ce qu'**il comprend :

- une source lumineuse (200), pour l'émission d'un faisceau lumineux dit faisceau d'analyse (1200) ;
- un dispositif optique (100 ; 100', 100") selon l'une quelconque des revendications 1 à 12, dans lequel l'un parmi l'au moins un guide d'onde d'injection et/ou extraction (110 ; 110' ; $110_1$) est agencé pour recevoir le faisceau lumineux d'analyse (1200), et pour transférer au micro-résonateur au moins une partie (1220) du faisceau lumineux d'analyse, à une longueur d'onde de résonance du micro-résonateur ; et
- au moins un photo-détecteur (300 ; $300_1$; $300_2$), agencé pour recevoir un faisceau lumineux (1300; 1330) émis en sortie dudit dispositif optique, et résultant du couplage entre ledit guide d'onde d'injection et/ou extraction (110 ; 110' ; $110_1$; $110_2$) et le micro-résonateur (120 ; 120' ; 120").

**14.** Capteur biologique ou chimique (1000) selon la revendication 13, **caractérisé en ce que** le dispositif optique (100 ; 100' ; 100") comprend un guide d'onde d'injection et/ou extraction (110 ; 110' ; $110_1$), et **en ce que** :

- la source lumineuse (200) est disposée en entrée du guide d'onde d'injection et/ou extraction (110 ; 110' ; $110_1$) ; et
- l'un parmi l'au moins un photo-détecteur (300 ; $300_1$) est disposé en sortie du guide d'onde d'injection et/ou extraction (110 ; 110' ; $110_1$), agencé pour recevoir un signal (1300) correspondant à ce qui reste du faisceau lumineux d'analyse (1200) après transit dans le micro-résonateur d'au moins une partie du faisceau lumineux d'analyse.

**15.** Capteur biologique ou chimique (1000) selon la revendication 13 ou 14, **caractérisé en ce que** le dispositif optique (100 ; 100' ; 100") comprend un guide d'onde d'injection ($110_1$) et un guide d'onde d'extraction ($110_2$), et **en ce que** :

- la source lumineuse (200) est disposée en entrée du guide d'onde d'injection ($110_1$) ; et
- l'un parmi l'au moins un photo-détecteur ($300_2$) est disposé en sortie du guide d'onde d'extraction ($110_2$), agencé pour recevoir un signal (1330) correspondant à ce qui reste de la partie du faisceau d'analyse transférée dans le micro-résonateur, après transit dans ledit micro-résonateur.


**Patentansprüche**

**1.** Optische Vorrichtung (100; 100'; 100"), enthaltend :

- einen Wellenleiter-Mikroresonator (120; 120'; 120"), der dazu vorgesehen ist, einen Lichtstrahl entlang eines Strahlengangs (20) mit geschlossener Schleife zu führen; und
- mindestens einen Einkopplungs- und/oder Auskopplungswellenleiter (110; 110'; $110_1$, $110_2$), der für die Ein-kopplung und/oder Auskopplung des Lichtstrahls mit dem Mikroresonator optisch gekoppelt ist;

wobei
der Mikroresonator (120; 120'; 120") aus einer Vielzahl von Elementarwellenleitern (121; 121') besteht, die so voneinander beabstandet sind, dass der Eingang eines Elementarwellenleiters nicht in direktem physischen Kontakt mit dem Ausgang eines benachbarten Elementarwellenleiters steht, paarweise durch Freiräume getrennt sind, die dazu ausgelegt sind, im Gebrauch durch ein gasförmiges oder flüssiges Medium belegt werden zu können, und hintereinander in einer schleifenförmigen Anordnung angeordnet sind;
**dadurch gekennzeichnet, dass** die optische Vorrichtung ferner ein Substrat (61) und eine zentrale Säule (66) enthält, wobei der Wellenleiter-Mikroresonator (120; 120'; 120") über dem Substrat (61) hängend in Abstützung auf der zentralen Säule (66) angeordnet ist.

**2.** Vorrichtung (100; 100'; 100") nach Anspruch 1, **dadurch gekennzeichnet, dass** die Elementarwellenleiter (121; 121') jeweils aus einem einzigen Material hergestellt sind.

3. Vorrichtung (100; 100'; 100") nach Anspruch 1 oder 2, **dadurch gekennzeichnet, dass** die Elementarwellenleiter (121; 121') alle die gleichen Abmessungen haben.

4. Vorrichtung (100; 100'; 100") nach einem der Ansprüche 1 bis 3, **dadurch gekennzeichnet, dass** die Elementarwellenleiter (121; 121') periodisch nacheinander in einem gleichmäßigen Abstand (P), Verteilungsabstand genannt, verteilt sind.

5. Vorrichtung (100; 100'; 100") nach Anspruch 4, **dadurch gekennzeichnet, dass** der Verteilungsabstand (P) kleiner ist als die Mittenwellenlänge des in dem Mikroresonator geführten Lichtstrahls.

6. Vorrichtung (100; 100'; 100") nach Anspruch 5, **dadurch gekennzeichnet, dass** der Verteilungsabstand (P) kleiner ist als :

$$\frac{\lambda}{2n_h}$$

wobei $\lambda$ die Mittenwellenlänge des im Mikroresonator geführten Lichtstrahls (120; 120'; 120") ist; und $n_h$ der mittlere Brechungsindex der Elementarwellenleiter (121; 121') ist.

7. Vorrichtung (100; 100'; 100") nach einem der Ansprüche 4 bis 6, **dadurch gekennzeichnet, dass** das Verhältnis zwischen der Länge ($l$) eines Elementarwellenleiters (121; 121') und dem Verteilungsabstand (P) zwischen 0,40 und 0,60 liegt.

8. Vorrichtung (100; 100'; 100") nach einem der Ansprüche 1 bis 7, **dadurch gekennzeichnet, dass** der Einkopplungs- und/oder Auskopplungswellenleiter (110; 110'; $110_1$, $110_2$) aus dem gleichen Material wie die Elementarwellenleiter (121; 121') besteht.

9. Vorrichtung (100; 100'; 100") nach einem der Ansprüche 1 bis 8, **dadurch gekennzeichnet, dass** die Elementarwellenleiter (121; 121') jeweils die gleiche Breite ($w$) aufweisen und dass die Breite ($w$) der Elementarwellenleiter strikt größer ist als die Breite ($W$) des Einkopplungs- und/oder Auskopplungswellenleiters (110; 110'; $110_1$, $110_2$).

10. Vorrichtung (100; 100'; 100") nach Anspruch 9, **dadurch gekennzeichnet, dass** das Verhältnis der Breite ($w$) der Elementarwellenleiter (121; 121') geteilt durch die Breite ($W$) des Einkopplungs- und/oder Auskopplungswellenleiters (110; 110'; $110_1$, $110_2$) zwischen 1,8 und 2,2 liegt.

11. Vorrichtung (100; 100'; 100") nach Anspruch 9 oder 10, **dadurch gekennzeichnet, dass** die Breite ($w$) der Elementarwellenleiter (121; 121') und die Breite ($W$) des Einkopplungs- und/oder Auskopplungswellenleiters (110; 110'; $110_1$, $110_2$) dazu ausgelegt sind, dass der Einkopplungs- und/oder Auskopplungswellenleiter eine geführte Mode mit einem effektiven Index aufweist, der auf plus oder minus 10% genau gleich dem effektiven Index einer geführten Mode des Mikroresonators ist.

12. Vorrichtung (100; 100'; 100") nach einem der Ansprüche 1 bis 11, **dadurch gekennzeichnet, dass** der Mikroresonator (120; 120'; 10") und der Einkopplungs- und/oder Auskopplungswellenleiter (110; 110'; $110_1$, $110_2$) voneinander beabstandet sind.

13. Biologischer bzw. chemischer Sensor (1000; 1000'), **dadurch gekennzeichnet, dass** er enthält:

- eine Lichtquelle (200) zum Emittieren eines Lichtstrahls, Analysestrahl (1200) genannt;
- eine optische Vorrichtung (100; 100', 100") nach einem der Ansprüche 1 bis 12, wobei der eine von mindestens einem Einkopplungs- und/oder Auskopplungswellenleiter (110; 110'; $110_1$) dazu vorgesehen ist, den Analyse-Lichtstrahl (1200) zu empfangen und mindestens einen Teil (1220) des Analyse-Lichtstrahls bei einer Resonanzwellenlänge des Mikroresonators an den Mikroresonator zu übertragen; und
- mindestens einen Photodetektor (300; $300_1$; $300_2$), der dazu vorgesehen ist, einen Lichtstrahl (1300; 1330) zu empfangen, der am Ausgang der optischen Vorrichtung emittiert wird und sich aus der Kopplung zwischen dem Einkopplungs- und/oder Auskopplungswellenleiter (110; 110'; $110_1$; $110_2$) und dem Mikroresonator (120; 120'; 120") ergibt.

14. Biologischer bzw. chemischer Sensor (1000) nach Anspruch 13, **dadurch gekennzeichnet, dass** die optische Vorrichtung (100; 100'; 100") einen Einkopplungs- und/oder Auskopplungswellenleiter (110; 110'; $110_1$) enthält, und dass:

> - die Lichtquelle (200) am Eingang des Einkopplungs- und/oder Auskopplungswellenleiters (110; 110'; $110_1$) angeordnet ist; und
> - der eine aus mindestens einem Photodetektor (300; $300_1$) am Ausgang des Einkopplungs- und/oder Auskopplungswellenleiters (110; 110'; $110_1$) angeordnet ist, der dazu vorgesehen ist, ein Signal (1300) zu empfangen, das dem entspricht, was von dem Analyse-Lichtstrahl (1200) nach dem Durchgang durch den Mikroresonator von zumindest einem Teil des Analyse-Lichtstrahls überbleibt.

15. Biologischer bzw. chemischer Sensor (1000) nach Anspruch 13 oder 14, **dadurch gekennzeichnet, dass** die optische Vorrichtung (100; 100'; 100") einen Einkopplungswellenleiter ($110_1$) und einen Auskopplungswellenleiter ($110_2$) enthält, und dass:

> - die Lichtquelle (200) am Eingang des Einkopplungswellenleiters ($110_1$) angeordnet ist; und
> - der eine aus mindestens einem Photodetektor ($300_2$) am Ausgang des Auskopplungswellenleiters ($110_2$) angeordnet ist, der dazu vorgesehen ist, ein Signal (1330) zu empfangen, das dem entspricht, was von nach dem Durchgang durch den Mikroresonator von dem in den Mikroresonator übertragenen Teil des Analyse-Lichtstrahls überbleibt.

**Claims**

1. An optical device (100; 100'; 100") comprising:

> - a waveguide microresonator (120; 120'; 120"), arranged to guide a light beam along a closed loop optical path (20); and
> - at least one injection and/or extraction waveguide (110; 110'; $110_1$, $110_2$), optically coupled with the microresonator for injecting and/or extracting said light beam;

   wherein the microresonator (120; 120'; 120") consists of a plurality of elementary waveguides (121; 121') spaced from each other so that the input of an elementary waveguide is not in direct physical contact with the output of a neighbour elementary waveguide, separated two by two by free spaces configured to, in use, be occupied by a gas or liquid medium, and disposed one after the other according to a loop-shaped arrangement;
   **characterised in that** the optical device further includes a substrate (61) and a central pillar (66), with the waveguide microresonator (120; 120'; 120"being arranged suspended above the substrate (61), resting on the central pillar (66).

2. The device (100; 100'; 100") according to claim 1, **characterised in that** the elementary waveguides (121; 121') each consist of a single material.

3. The device (100; 100'; 100") according to claim 1 or 2, **characterised in that** the elementary waveguides (121; 121') all have the same dimensions.

4. The device (100; 100'; 100") according to any of claims 1 to 3, **characterised in that** the elementary waveguides (121; 121') are periodically distributed one after the other, according to a regular pitch ($P$) called a distribution pitch.

5. The device (100; 100'; 100") according to claim 4, **characterised in that** the distribution pitch ($P$) is lower than the central wavelength of the light beam guided in the microresonator.

6. The device (100; 100'; 100") according to claim 5, **characterised in that** the distribution pitch ($P$) is lower than:

$$\frac{\lambda}{2n_h}$$

   with $\lambda$ being the central wavelength of the light beam guided in the microresonator (120; 120'; 120"); and

$n_h$ being the mean refractive index of the elementary waveguides (121; 121').

7. The device (100; 100'; 100") according to any of claims 4 to 6, **characterised in that** the ratio of the length (*l*) of an elementary waveguide (121; 121') to the distribution pitch (*P*), is between 0.40 and 0.60.

8. The device (100; 100'; 100") according to any of claims 1 to 7, **characterised in that** the injection and/or extraction waveguide (110; 110'; $110_1$, $110_2$) consists of a same material as the elementary waveguides (121; 121').

9. The device (100; 100'; 100") according to any of claims 1 to 8, **characterised in that** the elementary waveguides (121; 121') each have the same width (*w*), and **in that** the width (*w*) of the elementary waveguides is strictly greater than the width (*W*) of the injection and/or extraction waveguide (110; 110'; $110_1$, $110_2$).

10. The device (100; 100'; 100") according to claim 9, **characterised in that** the ratio of the width (*w*) of the elementary waveguides (121; 121'), divided by the width (*W*) of the injection and/or extraction waveguide (110; 110'; $110_1$, $110_2$), is between 1.8 and 2.2.

11. The device (100; 100'; 100") according to claim 9 or 10, **characterised in that** the width (*w*) of the elementary waveguides (121; 121') and the width (*W*) of the injection and/or extraction waveguide (110; 110'; $110_1$, $110_2$) are adapted so that the injection and/or extraction waveguide has a guided mode with an effective index equal to the effective index of a guided mode of the microresonator, within more or less 10%.

12. The device (100; 100'; 100") according to any of claims 1 to 11, **characterised in that** the microresonator (120; 120'; 10") and the injection and/or extraction waveguide (110; 110'; $110_1$, $110_2$) are spaced from each other.

13. A biological or chemical sensor (1000; 1000'), **characterised in that** it comprises:

    - a light source (200), for emitting a light beam called an analysis beam (1200);
    - an optical device (100; 100', 100") according to any of claims 1 to 12, wherein one from the at least one injection and/or extraction waveguide (110; 110'; $110_1$) is arranged to receive the analysis light beam (1200), and to transfer at least part (1220) of the analysis light beam to the microresonator, at a resonant wavelength of the microresonator; and
    - at least one photodetector (300; $300_1$; $300_2$), arranged to receive a light beam (1300; 1330) output from said optical device, and resulting from coupling between said injection and/or extraction waveguide (110; 110'; $110_1$, $110_2$) and the microresonator (120; 120'; 120").

14. The biological or chemical sensor (1000) according to claim 13, **characterised in that** the optical device (100; 100'; 100") comprises an injection and/or extraction waveguide (110; 110'; $110_1$), and **in that**:

    - the light source (200) is disposed at the input of the injection and/or extraction waveguide (110; 110'; $110_1$); and
    - one from the at least one photodetector (300; $300_1$) is disposed at the output of the injection and/or extraction waveguide (110; 110'; $110_1$), arranged to receive a signal (1300) corresponding to what remains of the analysis light beam (1200) after at least part of the analysis light beam passes through the microresonator.

15. The biological or chemical sensor (1000) according to claim 13 or 14, **characterised in that** the optical device (100; 100'; 100") comprises an injection waveguide ($110_1$) and an extraction waveguide ($110_2$), and **in that**:

    - the light source (200) is disposed at the input of the injection waveguide ($110_1$); and
    - one from the at least one photodetector ($300_2$) is disposed at the output of the extraction waveguide ($110_2$), arranged to receive a signal (1330) corresponding to what remains of part of the analysis beam transferred into the microresonator, after passing through said microresonator.

FIG.1

FIG.2

FIG.3

FIG.4A

FIG.4B

FIG.5

FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2009220184 A1

- WO 2014161565 A1

**Littérature non-brevet citée dans la description**

- **CLINTON J. SMITH et al.** Sensing nitrous oxide with QCL-coupled silicon-on-sapphire ring resonators. *OPTICS EXPRESS,* vol. 23 (5), 5491-5499
- **VALENTINA DONZELLA et al.** Design and fabrication of SOI micro-ring resonators based on sub-wavelength grating waveguides. *Optics Express,* vol. 23 (4), 4791

- **JONAS FLUECKIGER et al.** Sub-wavelength grating for enhanced ring resonator biosensor. *Optics Express,* vol. 24 (14), 15672